# EUROPÄISCHE PATENTANMELDUNG

(11) **EP 1 264 565 A2**
(43) Veröffentlichungstag der Anmeldung: **11.12.2002**
(21) Anmeldenummer: 02009831.5
(22) Anmeldetag: 02.05.2002
(51) Int. Cl.: A47F 5/08

(54) **Haltevorrichtung**

(30) Priorität: 22.05.2001 DE 10124824
(71) Anmelder: Kunkel, Paul, 69234 Dielheim (DE)
(72) Erfinder: Kunkel, Paul, 69234 Dielheim (DE)
(74) Vertreter: Weber, Walter, Dipl.-Ing.(FH)

(57) **Zusammenfassung**

Die Erfindung betrifft eine Haltevorrichtung (1), bestehend aus einer Befestigungswand (2) und mindestens einem an dieser befestigbaren Träger (3), wobei die Befestigung mittels mindestens einem Paar zusammenwirkender Befestigungselemente (4, 4') erfolgt, indem ein Befestigungselement (4) als Befestigungsknopf (5) mit Hals (6) ausgebildet ist und das andere Befestigungselement (4') eine Aussparung (7) ist, durch welche der Befestigungsknopf (5) hindurchschiebbar und mit dem Hals (6) in die Aussparung (7) einhängbar ausgebildet ist, wobei mehrere Aussparungen (7) auf eine Fläche (8) verteilt rasterförmig versetzt in Reihen (9, 9') angeordnet sind.

Eine derartige Haltevorrichtung soll so ausgebildet werden, daß eine Variabilität der Anordnung von Trägern (3) in ausreichendem Maß gewährleistet ist. Dies wird dadurch erreicht, daß die Aussparungen (7) in waagerechter Richtung länglich ausgebildet sind, an der Unterseite eine Gerade (10) aufweisen und die Aussparungen (7) einer Reihe (9) zu den Aussparungen (6) der nächsten Reihe (9') in senkrechter Richtung Überlappungsbereiche (11) aufweisen.

## Beschreibung

Die Erfindung betrifft eine Haltevorrichtung, bestehend aus einer Befestigungswand und mindestens einem an dieser befestigbaren Träger, wobei die Befestigung mittels mindestens einem Paar zusammenwirkender Befestigungselemente erfolgt, indem ein Befestigungselement als Befestigungsknopf mit Hals ausgebildet ist und das andere Befestigungselement eine Aussparung ist, durch welche der Befestigungsknopf hindurchschiebbar und mit dem Hals in die Aussparung einhängbar ausgebildet ist, wobei mehrere Aussparungen auf eine Fläche verteilt rasterförmig versetzt in Reihen angeordnet sind.

Derartige Haltevorrichtungen dienen dazu, Dinge beliebiger Art auf einer Befestigungswand anzuordnen. Es kann sich dabei um Werkzeuge oder um Funktionselemente handeln. Letztere werden insbesondere dann auf derartigen Befestigungswänden angeordnet, wenn sie zu Versuchs-, Lehr- oder Installationszwecken einander zugeordnet werden sollen. Es kann sich dabei um Funktionselemente im Bereich der Heizungs-, Klima-, Gas-, Wasser-, Lüftungs-, Elektro- oder einer anderen Installationstechnik, der Regelungs-, Meß- oder einer sonstigen Technik handeln.

Eine Haltevorrichtung der eingangs genannten Art ist aus der DE 94 04 972.6 U1 bekannt. Der in dieser Schrift offenbarte Gegenstand weist runde Befestigungsknöpfe auf, die in etwas größere runde Aussparungen einfügbar sind. Die Ausnehmungen sind in aneinandergrenzenden Reihen und bezüglich zweier aneinandergrenzender Reihen um den halben Rasterabstand gegenseitig versetzt angeordnet. Bei dieser Haltevorrichtung ist die Anordnung von Gegenständen wenig variabel, da Befestigungen nur an den vorgegebenen Punkten erfolgen können. Sollen Funktionselemente räumlich einander zugeordnet werden, beispielsweise, weil sie durch Rohre miteinander verbunden werden sollen, so erfordert dies eine ständige Berücksichtigung der limitierten Befestigungsmöglichkeiten. Oft ist eine solche Berücksichtigung nicht möglich, dann sind Anpassungen von Verbindungen, wie Rohrverbindungen, notwendig. Dies ist wegen der erforderlichen Bearbeitung derselben unerwünscht. Die Haltevorrichtung ist somit wenig variabel. Eine ausreichende Variabilität ist jedoch insbesondere bei Versuchsund Lehraufbauten notwendig, da diese ständig neu aufgebaut und oft auch während des Unterrichts verändert werden müssen.

Der Erfindung liegt daher die Aufgabe zugrunde, eine Haltevorrichtung der eingangs genannten Art derart auszugestalten, daß die Variabilität der Anordnung von Trägern in ausreichendem Maß gewährleistet ist.

Die Aufgabe wird erfindungsgemäß dadurch gelöst, daß die Aussparungen in waagerechter Richtung länglich ausgebildet sind, an der Unterseite eine Gerade aufweisen und die Aussparungen einer Reihe zu den Aussparungen der nächsten Reihe in senkrechter Richtung Überlappungsbereiche aufweisen.

Der Vorteil der Erfindung besteht darin, daß je nach Länge der Geraden an der Unterseite der länglichen Aussparungen die an der Befestigungswand angebrachten Träger und damit die auf ihnen angeordneten Funktionselemente mehr oder weniger stark seitlich verschiebbar sind. Dadurch sind die Aufbauten der oben genannten Art flexibler vorzunehmen und es ist möglich, die gegenseitige Zuordnung besser aneinander anzupassen. Insbesondere, wenn Funktionselemente durch Rohrverbindungen miteinander verbunden werden müssen, erleichtert die Erfindung den Aufbau und erspart weitgehendst ständige Anpassungen von Verbindungsstücken.

Im folgenden werden Weiterbildungen der Erfindung mit weiteren Vorteilen beschrieben.

Eine Weiterbildung sieht vor, daß das Maß der Überlappungsbereiche derart gewählt ist, daß Befestigungselemente in allen Reihen von Aussparungen untereinander anordenbar sind. Sind die Hälse der Knöpfe so geformt, daß sie sich bis an die Ränder der ebenfalls entsprechend geformten Aussparungen verschieben lassen, so wird dies dadurch erzielt, daß das Maß der Überlappungsbereiche mindestens der im Befestigungszustand in waagerechter Richtung gemessenen Dicke der Hälse der Befestigungselemente entspricht. Dadurch ist es im Gegensatz zum eingangs genannten Stand der Technik gewährleistet, daß in jeder der Reihen der versetzt angeordneten Aussparungen trotz dieser versetzten Anordnung eine exakt übereinanderliegende Anordnung von Befestigungen möglich ist. Gerade eine solche ist für eine gegenseitige Zuordnung von Funktionselementen oft erforderlich und es ist daher von Vorteil, wenn dafür jede Reihe von Aussparungen zur Verfügung steht. Durch Verschieben eines Trägers und gegebenenfalls ein Umhängen der Befestigungsknöpfe in die nächsten Aussparungen kann in waagerechter Richtung somit jede Zuordnung gewählt werden.

Die Befestigungsknöpfe und die Aussparungen können beliebige Formen aufweisen. Beispielsweise kann ein Befestigungsknopf rund ausgestaltet werden und die Aussparungen oben und unten Geraden aufweisen und an den Rändern eine Rundung, welche etwas größer ist als die der Befestigungsknöpfe, so daß letztere einfügbar sind. Ein zweckmäßiger Vorschlag sieht jedoch vor, daß der Befestigungsknopf im wesentlichen viereckig ausgebildet ist und die Aussparung im wesentlichen rechteckig. Dabei sind natürlich an den Ecken Rundungen zweckmäßig, um Verletzungen an den Knöpfen zu vermeiden.

Der Hals des Befestigungsknopfes kann eine Fläche aufweisen, die der Auflage auf der Geraden der Aussparung dient. Dadurch wird ein besserer Halt des Trägers erzielt, insbesondere dann, wenn dieser nur durch ein Befestigungselement an der Befestigungswand gehalten wird. Selbstverständlich ist es jedoch auch möglich, daß die Aussparungen, die Befestigungsknöpfe und deren Hälse andere Formen aufweisen. Lediglich die Geraden an den Unterseiten der Aussparungen sind notwendig, um eine Verschiebbarkeit zwischen Aussparungen und Befestigungsknöpfen mit Hals zu erreichen.

Die Befestigung eines Trägers an der Befestigungswand kann durch mehrere Paare von Befestigungselementen erfolgen. Durch zwei Paare von Befestigungselementen wird eine sichere waagerechte Lage erzielt. Dabei kann sich ein Träger mit seinem unteren Ende an der Befestigungswand abstützen, wobei für diesen Zweck auch Abstützelemente angeordnet sein können. Selbstverständlich sind jedoch auch vier oder mehrere Paare von Befestigungselementen möglich, um einen Träger allseitig sicher zu halten.

Eine Ausgestaltungsmöglichkeit besteht darin, daß die Befestigungswand rasterförmig angeordnete Befestigungsknöpfe mit Hälsen trägt und daß die Träger einige Aussparungen zum Anhängen an der Befestigungswand aufweisen. Bevorzugt wird jedoch vorgeschlagen, daß der Befestigungswand die als Aussparungen ausgebildeten Befestigungselemente und dem Träger mindestens ein als Befestigungsknopf mit Hals ausgebildetes Befestigungselement zugeordnet ist. Diese Ausgestaltung hat den Vorteil, daß die gesamte Oberfläche der Träger zur Befestigung von Gegenständen zur Verfügung steht, da keine Befestigungsknöpfe durch die Aussparungen hindurch in diese Fläche hineinragen. Außerdem sind die Befestigungsknöpfe bei dieser Ausgestaltung in geringerem Maß vorhanden und die preiswerter herzustellenden Aussparungen in großer Anzahl.

Sehr zweckmäßig ist es, wenn ein Träger nur über ein einziges Befestigungselement verfügt, da er dann am leichtesten beliebig einhängbar ist. Dann sollte das Befestigungselement zum Schwerpunkt des Trägers mit dem darauf angebrachten, auf der Befestigungswand anzubringenden Objekt derart angeordnet sein, daß der Träger mit dem Objekt sich durch die Schwerkraft in seine Sollage begibt. Zur Stabilisierung des Trägers mit dem Objekt ist es dann zweckmäßig, wenn der Hals eine Fläche aufweist, die zum Schwerpunkt des Trägers derart angeordnet ist, daß die Fläche des Halses in der Ruhelage des Trägers auf der Geraden einer Aussparung aufliegt. Zu diesem Zweck kann der Hals viereckig ausgebildet sein, muß dies aber nicht, da jede Gestalt mit einer derartigen Fläche zu einer sicheren Ausrichtung des Trägers und einem gewissen Halt in der Sollage führt.

Eine besonders vorteilhafte Ausführungsform sieht vor, daß der Befestigungsknopf viereckig und derart angeordnet ist, daß seine Diagonalen in der Ruhelage im wesentlichen senkrecht und waagerecht stehen, wobei die Aussparungen auch an der Oberseite eine Gerade aufweisen und das Maß von der Auflage des Halses auf der Geraden bis zur oberen Spitze des Befestigungsknopfes größer ist als der Abstand zwischen den Geraden der Aussparungen. Auf diese Weise ist es möglich, daß der Träger mit dem Befestigungsknopf in eine Aussparung eingefügt werden kann und dann durch eine Vierteldrehung des Trägers der Befestigungsknopf in eine Lage verbracht wird, in der er nicht mehr aus der Aussparung herausnehmbar ist. Diese Lage muß dann der Sollage entsprechen. Auf diese Weise können die Träger selbstverriegelnd an der Befestigungswand angebracht werden. Diese Ausführungsform wird vorzugsweise derart ausgebildet, daß der Hals viereckig ausgebildet ist und seine Flächen zu den Seitenkanten eines viereckigen Befestigungsknopfs einen Winkel α von 45° bilden.

Weiterhin kann vorgesehen sein, daß der mindestens eine Träger am unteren Teil seiner gegen die Befestigungswand weisenden Fläche ein Abstützelement aufweist. Dieses Abstützelement wird zweckmäßigerweise derart ausgebildet, daß es in jeder Lage an der Befestigungswand anliegt. Dazu kann es größer ausgebildet sein als eine Aussparung oder sonst eine Gestalt aufweisen, derart, daß es auf den Flächenteilen der Befestigungswand zwischen den Aussparungen immer zur Anlage kommt. Es kann vorgesehen sein, daß das Abstützelement aus einem gegenüber der Befestigungswand rutschfesten Material besteht. Dann muß zwar, wenn nur ein Befestigungselement vorgesehen ist, bei der Ausrichtung in die Sollage etwas nachgeholfen werden, dafür verbleibt der Träger aber sicherer in dieser Position.

Selbstverständlich sind noch eine Vielzahl weiterer verschiedener Ausgestaltungen denkbar. So können die Reihen von Aussparungen in weiterem Abstand angeordnet werden oder so nah beieinander, daß das dazwischen verbleibende Material der Befestigungswand dieser noch genügend Stabilität gibt. Die Befestigungsknöpfe können mit Träger oder Befestigungswand fest verbunden sein oder es ist möglich, daß die Befestigungsknöpfe mit den Hälsen an- und abschraubbar ausgestaltet sind, um beispielsweise Träger nach Bedarf mit einem oder mehreren Befestigungsknöpfen zu versehen. Zu diesem Zweck kann ein Träger mehrere Bohrungen zur Befestigung von Befestigungsknöpfen mit Hälsen aufweisen, beispielsweise um ihn wahlweise mit einem, zweien oder vier Befestigungselementen zu versehen. Weitere verschiedene Ausgestaltungsmöglichkeiten sind selbstverständlich möglich, auch beliebige Kombinationen der genannten Merkmale.

Nachfolgend wird die Erfindung anhand von in der Zeichnung dargestellten Ausführungsbeispielen erläutert. Es zeigen
- **Fig. 1**: ein erstes Ausführungsbeispiel zur Veranschaulichung der wesentlichen erfindungsgemäßen Vorteile,
- **Fig. 2**: ein Ausführungsbeispiel mit zwei Paaren von Befestigungselementen,
- **Fig. 3**: ein Ausführungsbeispiel mit einem Paar von Befestigungselementen als Schnittdarstellung,
- **Fig. 4a bis 4f**: verschiedene Ausführungsformen des Befestigungsknopfes und des Halses und
- **Fig. 5**: ein Ausführungsbeispiel mit Selbstverriegelung

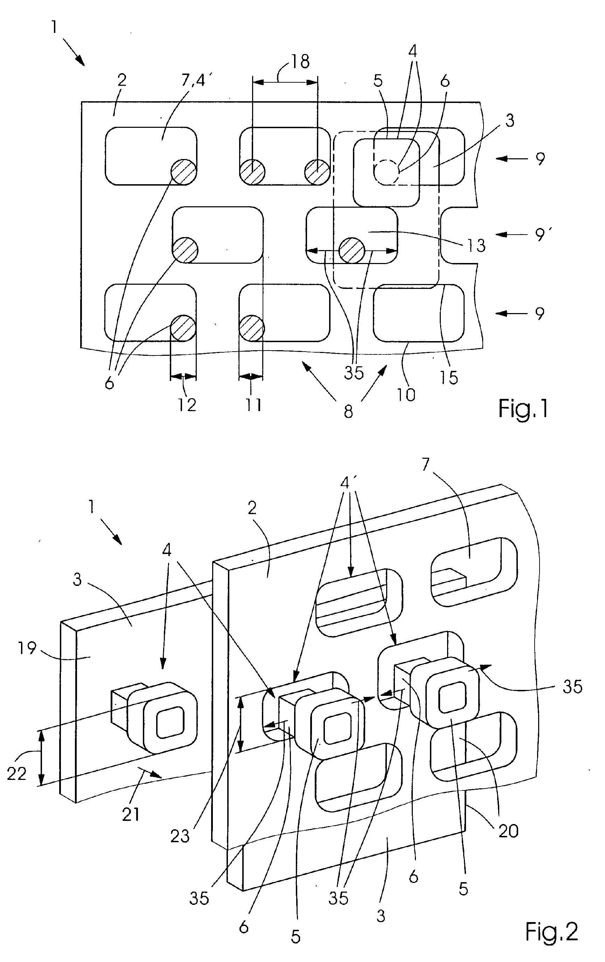

**Fig. 1** zeigt ein erstes Ausführungsbeispiel der Erfindung zur Veranschaulichung der wesentlichen erfindungsgemäßen Vorteile. Dargestellt ist eine Haltevorrichtung 1, die aus einer Befestigungswand 2 und mindestens einem Träger 3 besteht, wobei Befestigungselemente 4, 4' dazu dienen, die Träger 3 an der Befestigungswand 2 zu befestigen. Die Befestigungselemente 4, 4' bestehen aus zusammenwirkenden Paaren, dabei ist das Befestigungselement 4 ein Befestigungskopf 5 mit einem Hals 6, der bei dieser Ausführungsform an dem Träger 3 angeordnet ist. Bei der Darstellung ist die Befestigungswand 2 von hinten sichtbar, so daß der Träger 3 auf der von der Zeichnungsebene weggerichteten Vorderseite hängt. Zur Andeutung mehrerer Befestigungsmöglichkeiten sind nur noch Schnittdarstellungen durch die Hälse 6 gezeichnet - dort müssen Befestigungsknöpfe 5 und Träger 3 hinzugedacht werden.

Der dargestellte Träger 3 verfügt nur über ein Befestigungselement 4, wobei der Träger 3 mit dem darauf befindlichen, hier nicht sichtbaren Objekt 24 derart ausgestaltet ist, daß sich der Schwerpunkt 13 unterhalb des Befestigungselements 4 befindet. Wird also der Befestigungskopf 5 mit Hals 6 (erstes Befestigungselement 4) in das zweite Befestigungselement 4', das als Aussparung 7 ausgebildet ist, eingehängt, so bewegt sich der Träger 3 mit dem Objekt 24 durch den Schwerpunkt 13 von selbst in seine Sollage.

Die Aussparungen sind in Reihen 9 und 9' angeordnet, wobei die Reihen 9' gegenüber den Reihen 9 Überlappungsbereiche 11 aufweisen. Außerdem sind die Aussparungen 7 länglich ausgestaltet und weisen an ihrer Unterseite eine Gerade 10 auf. Daher sind auf dieser Gerade 10 die Befestigungsknöpfe 5 mit den Hälsen 6 in einem Bereich 18 entsprechend der Pfeile 35 verschiebbar. Dies gewährleistet, daß die Träger 3 mit den Objekten 24 in variabler Weise auf der Befestigungswand 2 plaziert werden können. Zweckmäßigerweise werden die Überlappungsbereiche 11 derart bemessen, daß sie mindestens der Dicke 12 eines Hals 6 entsprechen. Auf diese Weise ist es möglich, in allen Reihen 9 und 9' der Aussparungen 7 die Befestigungselemente 4 untereinander anzuordnen, wie dies bei den drei Befestigungselementen 4, von denen lediglich die Hälse 6 in geschnittener Form dargestellt sind, sichtbar ist.

Bei dem Ausführungsbeispiel sind auf der Fläche 8 der Befestigungswand 2 lediglich drei Reihen 9, 9' und 9 von Aussparungen 7 angeordnet, da es sich hier lediglich um einen kleinen Ausschnitt einer Befestigungswand 2 handelt. Tatsächlich kann die Befestigungswand 2 in beliebiger Größe ausgeführt werden und daher eine beliebige Anzahl von Aussparungen 7 in einer beliebigen Anzahl von Reihen 9 und 9' enthalten.

Die Aussparungen 7 sind rechteckig ausgebildet, wobei die Ecken abgerundet sind. Darum befindet sich auch am oberen Ende der Aussparung 7 eine Gerade 15, die der Geraden 10 entspricht. Die Befestigungsknöpfe 5 sind quadratisch ausgebildet und weisen ein Maß auf, das geringfügig kleiner ist, als der Abstand zwischen den Geraden 10 und 15. Auch die Befestigungsknöpfe 5 sind an den Ecken abgerundet. Dadurch lassen sich die Befestigungsknöpfe 5 durch die Aussparungen 7 durchstecken und können dann mit dem Hals 6 in die Befestigungswand 2 eingehängt und wie beschrieben verschoben werden.

**Fig. 2** zeigt ein Ausführungsbeispiel mit zwei Paaren von Befestigungselementen 4 und 4'. Dabei ist ein Träger 3 in einer Position 19 gezeichnet, dies ist die Position vor der Einfügung des Trägers 3 in die Befestigungswand 2. Der Träger 3 wird in Richtung des Pfeils 21 derart auf die Befestigungswand 2 zubewegt, daß die Knöpfe 5 durch die Aussparungen 7 hindurchtreten. Danach wird der Träger 3 ein kleines Stück nach unten bewegt, wodurch sich die Befestigungselemente 4 mit den Hälsen 6 an den Aussparungen 7 einhängen und von den Befestigungsknöpfen 5 gegen Herausbewegen gesichert werden. Diese Position nach der Einfügung der Befestigungselemente 4 zeigt die gezeichnete Position 20. Selbstverständlich müssen bei der Anordnung von zwei Befestigungsknöpfen 5 mit Hälsen 6 diese bezüglich ihrer Anordnung derart an die Aussparungen 7 angepaßt werden, daß beide Befestigungsknöpfe 5 gleichzeitig durch Aussparungen 7 hindurchpassen. Idealerweise sind sie derart an das Rastermaß der Aussparungen 7 angepaßt, daß der Bereich 18 für eine Verschiebung des Trägers 3 in Richtung der Pfeile 35 voll gewährleistet ist. Weiterhin ist noch dargestellt, daß die Höhe 22 der Befestigungsknöpfe 5 geringfügig kleiner ist, als die Höhen 23 der Aussparungen 7.

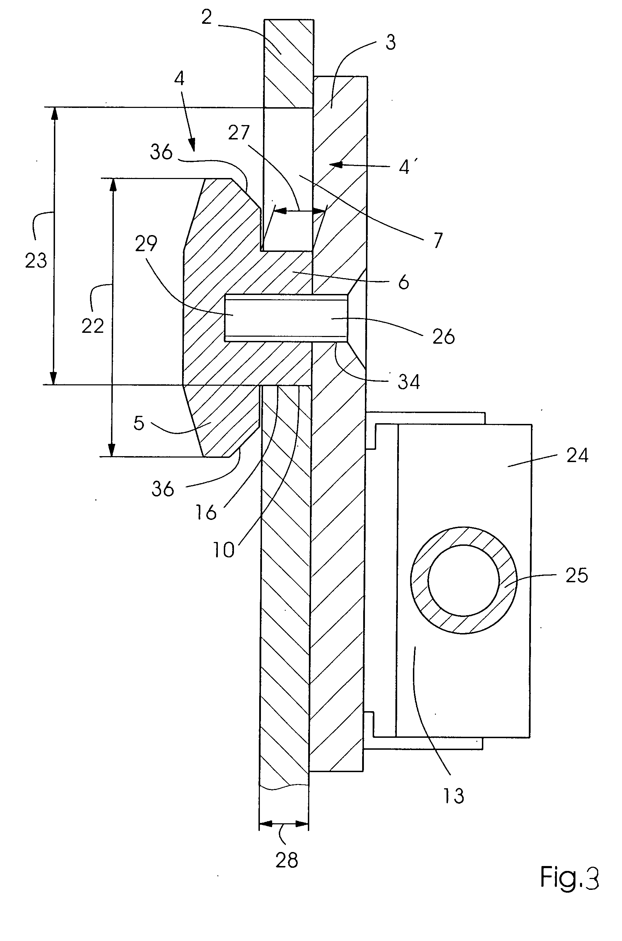

**Fig. 3** zeigt ein Ausführungsbeispiel mit einem einzigen Paar von Befestigungselementen 4, 4', wie dies bereits in Fig. 1 dargestellt wurde. Wegen der Funktion der Teile mit gleichen Bezugszeichen wird auf die obigen Ausführungen verwiesen. Es sind dabei weitere Einzelheiten gezeigt, wie die Anordnung eines Objektes 24 auf dem Träger 3, wobei dieses Objekt eine Installation mit einem Rohrleitungsanschluß 25 zeigt. Gerade für den Anschluß solcher Rohrleitungen ist die Variabilität der Anordnung der Objekte 24 von großem Vorteil, da die Objekte 24 bezüglich ihrer Position variabel entsprechend der vorhandenen Leitungsstücke angeordnet werden können.

Weiterhin ist gezeigt, daß die Dicke 28 der Befestigungswand 2 der Höhe 27 des Halses 6 entsprechen muß oder letztere ein kleinwenig größer sein kann, beispielsweise als Spiel oder um die Höhe eines zwischen Träger 3 und Befestigungswand 2 angeordneten Abstützelements (nicht gezeichnet) auszugleichen. Der Hals 6 des Befestigungsknopfes 5 weist bei dieser Ausgestaltung eine Phase 36 als Ein- und Ausführhilfe sowie eine Fläche 16 auf, die gewährleistet, daß es zu einer stabilen Lage auf der Geraden 10 der Aussparung 7 kommt, wenn der Träger 3 mit dem Objekt 24 durch den Schwerpunkt 13 seine Sollage einnimmt. Dadurch wird ein Pendeln bei Erschütterungen vermieden.

Der Befestigungsknopf 5 mit dem Hals 6 ist bei dieser Ausgestaltung mittels einer Schraube 26 durch eine Befestigungsbohrung 34 des Trägers 3 hindurchgeführt und an dem Träger 3 befestigt, wobei die Schraube 26 in ein Sacklochgewinde 29 des Befestigungselements 4 eingeschraubt ist. Zweckmäßigerweise sind die Träger 3 mit mehreren Befestigungsbohrungen 34 für Schrauben 26 ausgestattet, damit sie wahlweise mit einem Befestigungselement 4, mit zwei Befestigungselementen 4 oder mit mehreren Befestigungselementen 4 ausgestattet werden können.

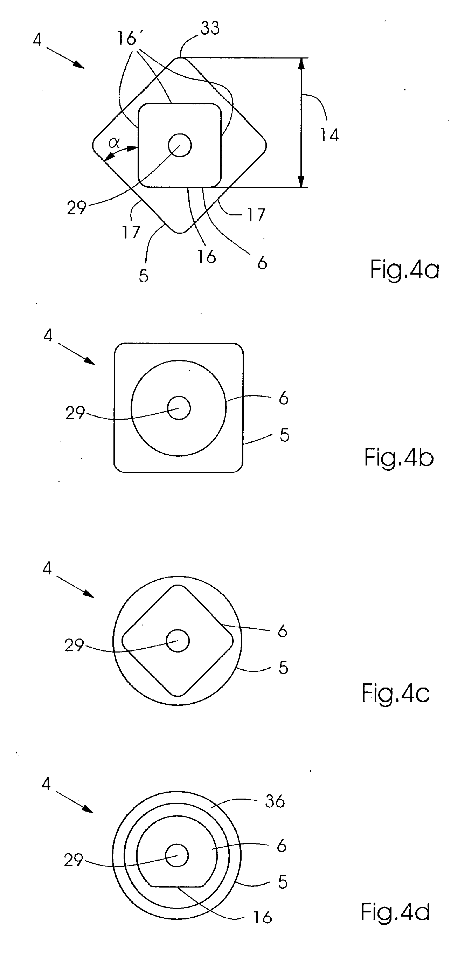

Die **Fig. 4a bis 4f** zeigen verschiedene Ausführungsformen von Befestigungsknöpfen 5 mit Hälsen 6.

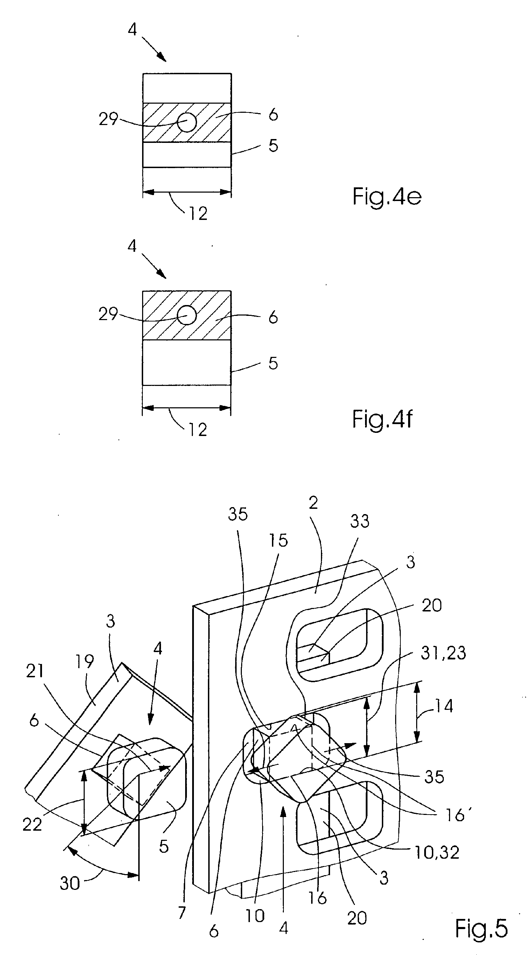

**Fig. 4a** zeigt ein Befestigungselement 4, welches selbstverriegelnd mit einer Befestigungswand 2 verbunden werden kann. Zu diesem Zweck sind die Flächen 16 und 16' eines viereckig ausgebildeten Halses 6 in einem Winkel α von 45° zu den Seitenkanten 17 des viereckig ausgebildeten Befestigungsknopfes 5 angeordnet. Die Fläche 16 des Halses 6 dient der Auflage 32 auf einer Geraden 10 einer Aussparung 7. Das Maß 14 von der als Auflage 32 dienenden Fläche 16 des Halses 6 ist bis zur Spitze 33 des Befestigungsknopfes 5 derart bemessen, daß sie größer ist als der Abstand 31 der Geraden 10 von der Geraden 15 der Aussparung 7 (siehe Fig. 5). Dadurch wird die Selbstverriegelung erreicht, die in Fig. 5 dargestellt ist. Statt der nicht der Auflage 32 dienenden Flächen 16' ist auch eine andere, zum Beispiel runde Ausgestaltung des Halses 6 möglich.

**Fig. 4b** zeigt ein Befestigungselement 4, das aus einem viereckigen Befestigungsknopf 5 und einem runden Hals 6 besteht.

**Fig. 4c** zeigt umgekehrt, daß der Befestigungsknopf 5 rund und der Hals 6 viereckig ausgebildet sein kann.

Eine weitere Ausgestaltung zeigt die **Fig. 4d**, hier ist der Befestigungsknopf 5 rund und der Hals 6 ebenfalls, jedoch weist er eine Fläche 16 als Auflagefläche auf der Geraden 10 auf, dies entspricht dem Befestigungsknopf 5 mit Hals 6, der bereits in Fig. 3 dargestellt ist. Außerdem ist eine Phase 36 als Ein- und Ausführhilfe vorgesehen - mit einer solchen können auch die anderen Ausgestaltungen von Befestigungsknöpfen 5 ausgestattet sein.

**Fig. 4e** zeigt einen rechteckigen Hals 6 (zur besseren Sichtbarmachung als Schnitt gezeichnet), der in waagerechter Richtung dasselbe Maß 12 wie der Knopf 5 aufweist.

Eine ähnliche Ausgestaltung zeigt **Fig. 4f**, wobei sich der Hals 6 jedoch am oberen Teil des Knopfes 5 befindet, so daß ein Haken entsteht.

**Fig. 5** zeigt ein Ausführungsbeispiel mit Selbstverriegelung mittels eines Befestigungsknopfes 5, wie er in Fig. 4a bereits erläutert wurde. Dazu wird der Träger 3, welcher mit der Befestigungswand 2 verbunden werden soll, in der Ebene des Trägers 3 in einem Winkel von 45° zur Sollage geneigt in Richtung des Pfeils 21 an die Befestigungswand 2 herangeführt, um den Befestigungsknopf 5 durch die Aussparung 7 hindurchzustecken. Ist dies erfolgt, so wird der Träger 3 in Richtung des Pfeils 30 in die Sollage geschwenkt, in der der Befestigungsknopf 5 sich in einer Lage befindet, in der seine Diagonalen in der Waagerechten und Senkrechten sind. Dies ist die Position 20 des Trägers 3, wie sie dargestellt ist. In dieser Position 20 bewirkt das Maß 14 von der Auflage der Fläche 16 des Halses 6 auf der Geraden 10 bis zu der Spitze 33 des Befestigungsknopfes 5, daß der Träger 3 verriegelt ist. Er kann durch den Überstand der Spitze 33 des Befestigungsknopfes 5 über die Gerade 15 nicht mehr von der Befestigungswand 2 entfernt werden. Trotzdem läßt sich der Träger 3 entsprechend der Pfeile 35 verschieben. Selbstverständlich muß natürlich auch bei dieser Ausführungsform die Höhe 23 der Aussparung 7, die dem Abstand zwischen den Geraden 10 und 15 entspricht, größer sein als die Höhe 22 des Befestigungsknopfes 5, damit die oben beschriebene Einfügung möglich ist.

Die Darstellungen zeigen lediglich eine Auswahl möglicher Ausführungsformern. Weitere sind denkbar, auch andere Ausgestaltungen der Aussparungen 7 oder weitere Ausführungsarten von Befestigungselementen 4, 4' mit allen möglichen Kombinationen von Ausbildungen der Befestigungsknöpfe 5 und der Hälse 6. Auch ist es möglich, einen Träger 3 mit einer Vielzahl von Befestigungselementen 4 zu versehen, was insbesondere dann zweckmäßig ist, wenn ein Träger 3 eine gewisse Größe aufweist.

### Bezugszeichenliste

- 1: Haltevorrichtung
- 2: Befestigungswand
- 3: Träger
- 4, 4': Befestigungselemente (Paar: 4 = Befestigungsknopf mit Hals und 4' = Aussparung)
- 5: Befestigungsknopf
- 6: Hals
- 7: Aussparung
- 8: Fläche
- 9, 9': Reihen
- 10: Gerade (Unterseite der Aussparung)
- 11: Überlappungsbereich
- 12: Dicke eines Halses
- 13: Schwerpunkt von Träger und Objekt
- 14: Maß von der Auflage des Halses auf der Geraden 10 bis zur oberen Spitze des Befestigungsknopfes
- 15: Gerade (Oberseite der Aussparungen)
- 16, 16': Flächen des Halses
- 17: Seitenkanten eines viereckigen Befestigungsknopfes
- 18: Bereich einer möglichen Verschiebung eines Befestigungselements 4
- 19: Position des Trägers vor der Einfügung
- 20: Position des Trägers nach der Einfügung
- 21: Pfeil: Einfügung
- 22: Höhe des Befestigungsknopfes
- 23: Höhe der Aussparung
- 24: Objekt
- 25: Rohrleitungsanschluß
- 26: Schraube zur Befestigung des Befestigungselements 4 am Träger
- 27: Höhe des Halses
- 28: Dicke der Befestigungswand
- 29: Sacklochgewinde
- 30: Schwenkung nach der Einfügung
- 31: Abstand zwischen den Geraden 10 und 15
- 32: Auflage
- 33: Spitze des Befestigungsknopfes
- 34: Befestigungsbohrung
- 35: Pfeile: Verschiebemöglichkeit
- 36: Phase als Ein- und Ausführhilfe
- α: Winkel zwischen den Flächen des Halses und den Seitenkanten eines viereckigen Befestigungsknopfes

## Patentansprüche

1. Haltevorrichtung (1), bestehend aus einer Befestigungswand (2) und mindestens einem an dieser befestigbaren Träger (3), wobei die Befestigung mittels mindestens einem Paar zusammenwirkender Befestigungselemente (4, 4') erfolgt, indem ein Befestigungselement (4) als Befestigungsknopf (5) mit Hals (6) ausgebildet ist und das andere Befestigungselement (4') eine Aussparung (7) ist, durch welche der Befestigungsknopf (5) hindurchschiebbar und mit dem Hals (6) in die Aussparung (7) einhängbar ausgebildet ist, wobei mehrere Aussparungen (7) auf eine Fläche (8) verteilt rasterförmig versetzt in Reihen (9, 9') angeordnet sind,
**dadurch gekennzeichnet,**
**daß** die Aussparungen (7) in waagerechter Richtung länglich ausgebildet sind, an der Unterseite eine Gerade (10) aufweisen und die Aussparungen (7) einer Reihe (9) zu den Aussparungen (6) der nächsten Reihe (9') in senkrechter Richtung Überlappungsbereiche (11) aufweisen.

2. Haltevorrichtung nach Anspruch 1,
**dadurch gekennzeichnet,**
**daß** das Maß der Überlappungsbereiche (11) derart gewählt ist, daß Befestigungselemente (4, 4') in allen Reihen (9, 9') von Aussparungen (7) untereinander anordenbar sind.

3. Haltevorrichtung nach Anspruch 2,
**dadurch gekennzeichnet,**
**daß** das Maß der Überlappungsbereiche (11) mindestens der im Befestigungszustand in waagerechter Richtung gemessen der Dicke (12) des Halses (6) eines Befestigungselementes (4) entspricht.

4. Haltevorrichtung nach Anspruch 1, 2 oder 3,
**dadurch gekennzeichnet,**
**daß** der Befestigungsknopf (5) im wesentlichen viereckig ausgebildet ist.

5. Haltevorrichtung nach einem der Ansprüche 1 bis 4,
**dadurch gekennzeichnet,**
**daß** die Aussparungen (7) im wesentlichen rechteckig ausgebildet sind.

6. Haltevorrichtung nach einem der Ansprüche 1 bis 5,
**dadurch gekennzeichnet,**
**daß** der Hals (6) des Befestigungsknopfes (5) eine Fläche (16) aufweist, die der Auflage auf der Geraden (10) der Aussparung (7) dient.

7. Haltevorrichtung nach einem der Ansprüche 1 bis 6,
**dadurch gekennzeichnet,**
**daß** die Befestigung eines Trägers (3) an der Befestigungswand (2) durch mehrere Paare von Befestigungselementen (4, 4') erfolgt.

8. Haltevorrichtung nach einem der Ansprüche 1 bis 7,
**dadurch gekennzeichnet,**
**daß** der Befestigungswand (2) die als Aussparungen (7) ausgebildeten Befestigungselemente (4') und dem Träger (3) mindestens ein als Befestigungsknopf (5) mit Hals (6) ausgebildetes Befestigungselement (4) zugeordnet ist.

9. Haltevorrichtung nach Anspruch 8,
**dadurch gekennzeichnet,**
**daß** der Träger (3) nur über ein Befestigungselement (4) verfügt.

10. Haltevorrichtung nach Anspruch 9,
**dadurch gekennzeichnet,**
**daß** das Befestigungselement (4) zum Schwerpunkt (13) des Trägers (3) mit dem darauf angebrachten, auf der Befestigungswand (2) anzubringenden Objekt (24) derart angeordnet ist, daß der Träger (3) mit dem Objekt (24) sich durch die Schwerkraft in seine Sollage begibt.

11. Haltevorrichtung nach Anspruch 10,
**dadurch gekennzeichnet,**
**daß** der Hals (6) eine Fläche (16) aufweist, die zum Schwerpunkt (13) des Trägers (3) mit Objekt (24) derart angeordnet ist, daß die Fläche (16) des Halses (6) in der Ruhelage des Träges (3) auf der Geraden (10) einer Aussparung (7) aufliegt.

12. Haltevorrichtung nach Anspruch 9, 10 oder 11,
**dadurch gekennzeichnet,**
**daß** der Befestigungsknopf (5) viereckig und derart angeordnet ist, daß seine Diagonalen in der Ruhelage im wesentlichen senkrecht und waagerecht stehen, wobei die Aussparungen (7) auch an der Oberseite eine Gerade (15) aufweisen und das Maß (14) von der Auflage des Halses (6) auf der Geraden (10) bis zur oberen Spitze (33) des Befestigungsknopfes (5) größer ist, als der Abstand (31) zwischen den Geraden (10 und 15) der Aussparungen (7).

13. Haltevorrichtung nach Anspruch 11 und 12,
**dadurch gekennzeichnet,**
**daß** der Hals (6) viereckig ausgebildet ist und seine Flächen (16, 16') zu den Seitenkanten (17) eines viereckigen Befestigungsknopfes (5) einen Winkel α von 45° bilden.

14. Haltevorrichtung nach einem der Ansprüche 1 bis 13,
**dadurch gekennzeichnet,**
**daß** der mindestens eine Träger (3) am unteren Teil seiner gegen die Befestigungswand (2) weisenden Fläche ein Abstützelement aufweist.

15. Haltevorrichtung nach Anspruch 14,
**dadurch gekennzeichnet,**
**daß** das Abstützelement derart ausgebildet ist, daß es in jeder Lage an der Befestigungswand (2) anliegt.

16. Haltevorrichtung nach Anspruch 15,
**dadurch gekennzeichnet,**
**daß** das Abstützelement aus einem gegenüber der Befestigungswand (2) rutschfesten Material besteht.
